(19)

**Europäisches Patentamt**
**European Patent Office**
**Office européen des brevets**

(11) **EP 4 645 769 A1**

(12) **EUROPEAN PATENT APPLICATION**

(43) Date of publication:
**05.11.2025 Bulletin 2025/45**

(21) Application number: **25174032.0**

(22) Date of filing: **02.05.2025**

(51) International Patent Classification (IPC):
**H04L 25/03** (2006.01)  **H04B 7/0456** (2017.01)
**H04B 7/08** (2006.01)  **H04L 25/02** (2006.01)

(52) Cooperative Patent Classification (CPC):
**H04B 7/0456; H04B 7/0854; H04L 25/0224;**
**H04L 25/03101; H04L 25/03305**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.05.2024 US 202463642458 P**
**10.03.2025 US 202519075654**

(71) Applicant: **Samsung Electronics Co., Ltd.**
**Suwon-si, Gyeonggi-do 16677 (KR)**

(72) Inventors:
• **HU, Yeqing**
**Mountain View, California, 94043 (US)**
• **LI, Yang**
**Mountain View, California, 94043 (US)**
• **NGUYEN, Thuy Van**
**Mountain View, California, 94043 (US)**
• **KIM, Kyeongjin**
**Mountain View, California, 94043 (US)**
• **ZHANG, Jianzhong**
**Mountain View, California, 94043 (US)**

(74) Representative: **Gulde & Partner**
**Patent- und Rechtsanwaltskanzlei mbB**
**Berliner Freiheit 2**
**10785 Berlin (DE)**

(54) **METHOD AND APPARATUS FOR JOINT CHANNEL ESTIMATION AND PORT REDUCTION FOR UPLINK DATA RECEPTION IN WIRELESS COMMUNICATION SYSTEM**

(57)    The present disclosure relates to a 5G communication system or a 6G communication system for supporting higher data rates beyond a 4G communication system such as long term evolution (LTE). Methods and apparatuses for joint channel estimation and port reduction for an uplink data reception in wireless communication systems. A method includes receiving, from a UE via an MMU, a DMRS; identifying a combining weight based on the DMRS; performing, based on the combining weight, a joint operation that performs a port reduction operation and a DMRS CE; and performing, based on the joint operation, a MMSE-IRC operation, in a reduce antenna dimension, for a data reception and the DMRS CE.

EP 4 645 769 A1

Description

## BACKGROUND

### 1) FIELD

The present disclosure relates generally to wireless communication systems and, more specifically, the present disclosure relates to joint channel estimation and port reduction for an uplink data reception in wireless communication systems.

### 2) DESCRIPTION OF RELATED ART

Considering the development of wireless communication from generation to generation, the technologies have been developed mainly for services targeting humans, such as voice calls, multimedia services, and data services. Following the commercialization of 5G (5th generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bit per second (bps) and a radio latency less than 100$\mu$sec, and thus will be 50 times as fast as 5G communication systems and have the 1/10 radio latency thereof.

In order to accomplish such a high data rate and an ultra-low latency, it has been considered to implement 6G communication systems in a terahertz (THz) band (for example, 95 gigahertz (GHz) to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, Radio Frequency (RF) elements, antennas, novel waveforms having a better coverage than Orthogonal Frequency Division Multiplexing (OFDM), beamforming and massive Multiple-input Multiple-Output (MIMO), Full Dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, Orbital Angular Momentum (OAM), and Reconfigurable Intelligent Surface

(RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, High-Altitude Platform Stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of Artificial Intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as Mobile Edge Computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive eXtended Reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

# EP 4 645 769 A1

## SUMMARY

The present disclosure relates to wireless communication systems and, more specifically, the present disclosure relates to joint channel estimation and port reduction for an uplink data reception in wireless communication systems.

In one embodiment, a base station (BS) in a wireless communication system is provided. The BS comprises a transceiver configured to receive, from a user equipment (UE) via a multi-input multi-output unit (MMU), a demodulation reference signal (DMRS). The BS further comprises a processor operably coupled to the transceiver, the processor configured to: identify a combining weight based on the DMRS, perform, based on the combining weight, a joint operation that performs a port reduction operation and a DMRS channel estimation (CE), and perform, based on the joint operation, a minimum mean-square error interference rejection combining (MMSE-IRC) operation, in a reduce antenna dimension, for a data reception and the DMRS CE.

In another embodiment, a method of a BS in a wireless communication system is provided. The method comprising: receiving, from a UE via an MMU, a DMRS; identifying a combining weight based on the DMRS; performing, based on the combining weight, a joint operation that performs a port reduction operation and a DMRS CE; and performing, based on the joint operation, a MMSE-IRC operation, in a reduce antenna dimension, for a data reception and the DMRS CE.

In yet another embodiment, a non-transitory computer-readable medium comprising program code is provided. The computer-readable medium, that when executed by at least one processor, causes an electronic device to: receive, from a UE via a MMU, a DMRS; identify a combining weight based on the DMRS; perform, based on the combining weight, a joint operation that performs a port reduction operation and a DMRS CE; and perform, based on the joint operation, a MMSE-IRC operation, in a reduce antenna dimension, for a data reception and the DMRS CE.

Other technical features may be readily apparent to one skilled in the art from the following figures, descriptions, and claims.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system, or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

## BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates an example of wireless network according to various embodiments of the present disclosure;

FIGURE 2 illustrates an example of gNB according to various embodiments of the present disclosure;

FIGURE 3 illustrates an example of UE according to various embodiments of the present disclosure;

FIGURES 4 and 5 illustrate example of wireless transmit and receive paths according to various embodiments of the present disclosure;

FIGURE 6 illustrates an example of antenna structure according to various embodiments of the present disclosure;

FIGURE 7 illustrates an example of a receiver structure for reducing a number of ports/data dimensions according to various embodiments of the present disclosure;

FIGURE 8 illustrates an example of joint CE and port reduction structure according to various embodiments of the present disclosure;

FIGURE 9 illustrates an example of joint estimation and port reduction according to various embodiments of the present disclosure;

FIGURE 10 illustrates an example of an angle domain and delay domain according to various embodiments of the present disclosure;

FIGURE 11 illustrates an example of compression matrix according to various embodiments of the present disclosure;

FIGURE 12 illustrates another example of compression matrix according to various embodiments of the present disclosure;

FIGURE 13 illustrates a flowchart of a method for joint channel estimation and port reduction for an uplink data reception according to various embodiments of the present disclosure;

FIGURE 14 illustrates an example of port reduction signal flow according to various embodiments of the present disclosure;

FIGURE 15 illustrates an example of joint DMRS CE and port reduction signal flow according to various embodiments of the present disclosure.

FIGURE 16 illustrates a block diagram of a terminal (or a user equipment (UE)), according to embodiments of the present disclosure; and

FIGURE 17 illustrates a block diagram of a base station, according to embodiments of the present disclosure.

## DETAILED DESCRIPTION

The present application claims priority to U.S. Provisional Patent Application No. 63/642,458, filed on May 3, 2024. The contents of the above-identified patent documents are incorporated herein by reference.

5th generation (5G) or new radio (NR) mobile communications is recently gathering increased momentum with all the worldwide technical activities on the various candidate technologies from industry and academia. The candidate enablers for the 5G/NR mobile communications include massive antenna technologies, from legacy cellular frequency bands up to high frequencies, to provide beamforming gain and support increased capacity, new waveform (e.g., a new radio access technology (RAT)) to flexibly accommodate various services/applications with different requirements, new multiple access schemes to support massive connections, and so on.

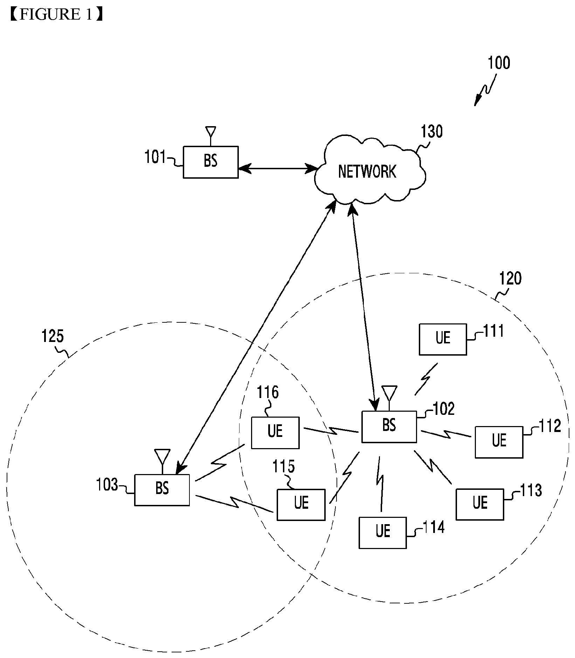

FIGURE 1 through FIGURE 17, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

To meet the demand for wireless data traffic having increased since deployment of 4G communication systems and to enable various vertical applications, 5G/NR communication systems have been developed and are currently being deployed. The 5G/NR communication system is considered to be implemented in higher frequency (mmWave) bands, e.g., 28 GHz or 60GHz bands, so as to accomplish higher data rates or in lower frequency bands, such as 6 GHz, to enable robust coverage and mobility support. To decrease propagation loss of the radio waves and increase the transmission distance, the beamforming, massive multiple-input multiple-output (MIMO), full dimensional MIMO (FD-MIMO), array antenna, an analog beam forming, large scale antenna techniques are discussed in 5G/NR communication systems.

In addition, in 5G/NR communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancelation and the like.

The discussion of 5G systems and frequency bands associated therewith is for reference as certain embodiments of the present disclosure may be implemented in 5G systems. However, the present disclosure is not limited to 5G systems, or the frequency bands associated therewith, and embodiments of the present disclosure may be utilized in connection with any frequency band. For example, aspects of the present disclosure may also be applied to deployment of 5G communication systems, 6G or even later releases which may use terahertz (THz) bands.

FIGURES 1-3 below describe various embodiments implemented in wireless communications systems and with the use of orthogonal frequency division multiplexing (OFDM) or orthogonal frequency division multiple access (OFDMA) communication techniques. The descriptions of FIGURES 1-3 are not meant to imply physical or architectural limitations to the manner in which different embodiments may be implemented. Different embodiments of the present disclosure may be implemented in any suitably arranged communications system.

FIGURE 1 illustrates an example wireless network according to various embodiments of the present disclosure. The embodiment of the wireless network shown in FIGURE 1 is for illustration only. Other embodiments of the wireless network 100 could be used without departing from the scope of this disclosure.

As shown in FIGURE 1, the wireless network includes a gNB 101 (e.g., base station, BS), a gNB 102, and a gNB 103. The gNB 101 communicates with the gNB 102 and the gNB 103. The gNB 101 also communicates with at least one network 130, such as the Internet, a proprietary Internet Protocol (IP) network, or other data network.

The gNB 102 provides wireless broadband access to the network 130 for a first plurality of user equipments (UEs) within a coverage area 120 of the gNB 102. The first plurality of UEs includes a UE 111, which may be located in a small business; a UE 112, which may be located in an enterprise; a UE 113, which may be a WiFi hotspot; a UE 114, which may be located in a first residence; a UE 115, which may be located in a second residence; and a UE 116, which may be a mobile device, such as a cell phone, a wireless laptop, a wireless PDA, or the like. The gNB 103 provides wireless broadband access to the network 130 for a second plurality of UEs within a coverage area 125 of the gNB 103. The second plurality of UEs includes the UE 115 and the UE 116. In some embodiments, one or more of the gNBs 101-103 may communicate with each other and with the UEs 111-116 using 5G/NR, long term evolution (LTE), long term evolution-advanced (LTE-A), WiMAX, WiFi, or other wireless communication techniques.

Depending on the network type, the term "base station" or "BS" can refer to any component (or collection of components) configured to provide wireless access to a network, such as transmit point (TP), transmit-receive point (TRP), an enhanced base station (eNodeB or eNB), a 5G/NR base station (gNB), a macrocell, a femtocell, a WiFi access point (AP), or other wirelessly enabled devices. Base stations may provide wireless access in accordance with one or more wireless communication protocols, e.g., 5G/NR 3$^{rd}$ generation partnership project (3GPP) NR, long term evolution (LTE), LTE advanced (LTE-A), high speed packet access (HSPA), Wi-Fi 802.11a/b/g/n/ac, etc. For the sake of convenience, the terms "BS" and "TRP" are used interchangeably in the present disclosure to refer to network infrastructure components that provide wireless access to remote terminals. Also, depending on the network type, the term "user equipment" or "UE" can refer to any component such as "mobile station," "subscriber station," "remote terminal," "wireless terminal," "receive point," or "user device." For the sake of convenience, the terms "user equipment" and "UE" are used in the present disclosure to refer to remote wireless equipment that wirelessly accesses a BS, whether the UE is a mobile device (such as a mobile telephone or smartphone) or is normally considered a stationary device (such as a desktop computer or vending machine).

Dotted lines show the approximate extents of the coverage areas 120 and 125, which are shown as approximately circular for the purposes of illustration and explanation only. It should be clearly understood that the coverage areas associated with gNBs, such as the coverage areas 120 and 125, may have other shapes, including irregular shapes, depending upon the configuration of the gNBs and variations in the radio environment associated with natural and man-made obstructions.

As described in more detail below, one or more of the gNBs 101-103 includes circuitry, programing, or a combination thereof, to support joint channel estimation and port reduction for an uplink data reception in wireless communication systems. Additionally, one or more of the UEs 111-116 includes circuitry, programing, or a combination thereof, for transmitting DMRS with the PUSCH and/or PUCCH to the gNBs 101-103 performing a joint operation comprising joint channel estimation and port reduction for an uplink data reception in wireless communication systems.

Although FIGURE 1 illustrates one example of a wireless network, various changes may be made to FIGURE 1. For example, the wireless network could include any number of gNBs and any number of UEs in any suitable arrangement. Also, the gNB 101 could communicate directly with any number of UEs and provide those UEs with wireless broadband access to the network 130. Similarly, each gNB 102-103 could communicate directly with the network 130 and provide UEs with direct wireless broadband access to the network 130. Further, the gNBs 101, 102, and/or 103 could provide access to other or additional external networks, such as external telephone networks or other types of data networks.

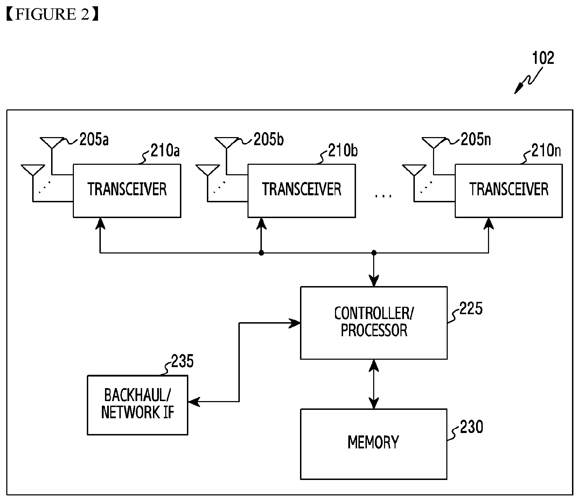

FIGURE 2 illustrates an example gNB 102 according to various embodiments of the present disclosure. The embodiment of the gNB 102 illustrated in FIGURE 2 is for illustration only, and the gNBs 101 and 103 of FIGURE 1 could have the same or similar configuration. However, gNBs come in a wide variety of configurations, and FIGURE 2 does not limit the scope of this disclosure to any particular implementation of a gNB.

As shown in FIGURE 2, the gNB 102 includes multiple antennas 205a-205n, multiple transceivers 210a-210n, a controller/processor 225, a memory 230, and a backhaul or network interface 235.

The transceivers 210a-210n receive, from the antennas 205a-205n, incoming RF signals, such as signals transmitted by UEs in the network 100. The transceivers 210a-210n downconvert the incoming RF signals to generate IF or baseband signals. The IF or baseband signals are processed by receive (RX) processing circuitry in the transceivers 210a-210n and/or controller/processor 225, which generates processed baseband signals by filtering, decoding, and/or digitizing the baseband or IF signals. The controller/processor 225 may further process the baseband signals.

Transmit (TX) processing circuitry in the transceivers 210a-210n and/or controller/processor 225 receives analog or digital data (such as voice data, web data, e-mail, or interactive video game data) from the controller/processor 225. The TX processing circuitry encodes, multiplexes, and/or digitizes the outgoing baseband data to generate processed baseband or IF signals. The transceivers 210a-210n up-converts the baseband or IF signals to RF signals that are transmitted via the antennas 205a-205n.

The controller/processor 225 can include one or more processors or other processing devices that control the overall operation of the gNB 102. For example, the controller/processor 225 could control the reception of UL channel signals and the transmission of downlink (DL) channel signals by the transceivers 210a-210n in accordance with well-known principles. The controller/processor 225 could support additional functions as well, such as more advanced wireless communication functions. For instance, the controller/processor 225 could support beam forming or directional routing operations in which outgoing/incoming signals from/to multiple antennas 205a-205n are weighted differently to effectively steer the outgoing signals in a desired direction. Any of a wide variety of other functions could be supported in the gNB 102 by the controller/processor 225.

The controller/processor 225 is also capable of executing programs and other processes resident in the memory 230, such as processes to support joint channel estimation and port reduction for an uplink data reception in wireless communication systems. The controller/processor 225 can move data into or out of the memory 230 as required by an executing process.

The controller/processor 225 is also coupled to the backhaul or network interface 235. The backhaul or network interface 235 allows the gNB 102 to communicate with other devices or systems over a backhaul connection or over a network. The interface 235 could support communications over any suitable wired or wireless connection(s). For example, when the gNB 102 is implemented as part of a wireless communication system (such as one supporting 5G/NR, LTE, or LTE-A), the interface 235 could allow the gNB 102 to communicate with other gNBs over a wired or wireless backhaul connection. When the gNB 102 is implemented as an access point, the interface 235 could allow the gNB 102 to communicate over a wired or wireless local area network or over a wired or wireless connection to a larger network (such as the Internet). The interface 235 includes any suitable structure supporting communications over a wired or wireless connection, such as an Ethernet or transceiver.

The memory 230 is coupled to the controller/processor 225. Part of the memory 230 could include a RAM, and another part of the memory 230 could include a Flash memory or other ROM.

Although FIGURE 2 illustrates one example of gNB 102, various changes may be made to FIGURE 2. For example, the gNB 102 could include any number of each component shown in FIGURE 2. Also, various components in FIGURE 2 could be combined, further subdivided, or omitted and additional components could be added according to particular needs.

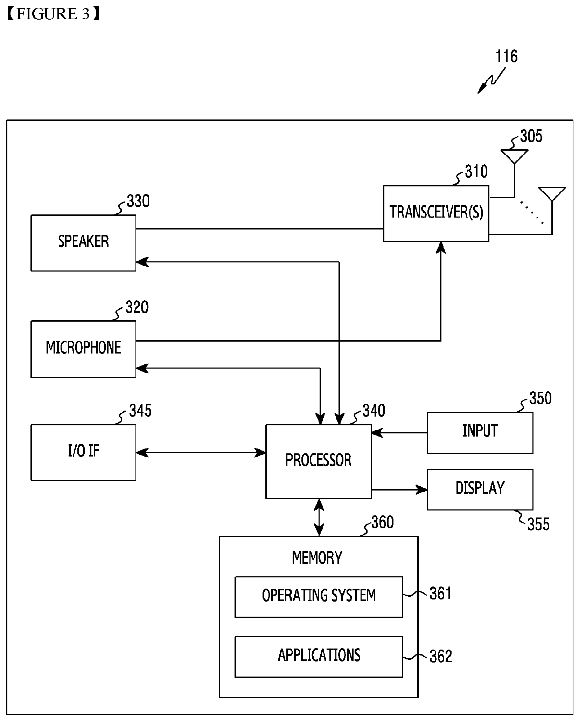

FIGURE 3 illustrates an example UE 116 according to various embodiments of the present disclosure. The embodiment of the UE 116 illustrated in FIGURE 3 is for illustration only, and the UEs 111-115 of FIGURE 1 could have the same or similar configuration. However, UEs come in a wide variety of configurations, and FIGURE 3 does not limit the scope of this disclosure to any particular implementation of a UE.

As shown in FIGURE 3, the UE 116 includes antenna(s) 305, a transceiver(s) 310, and a microphone 320. The UE 116 also includes a speaker 330, a processor 340, an input/output (I/O) interface (IF) 345, an input 350, a display 355, and a memory 360. The memory 360 includes an operating system (OS) 361 and one or more applications 362.

The transceiver(s) 310 receives from the antenna 305, an incoming RF signal transmitted by a gNB of the network 100. The transceiver(s) 310 down-converts the incoming RF signal to generate an intermediate frequency (IF) or baseband signal. The IF or baseband signal is processed by RX processing circuitry in the transceiver(s) 310 and/or processor 340, which generates a processed baseband signal by filtering, decoding, and/or digitizing the baseband or IF signal. The RX processing circuitry sends the processed baseband signal to the speaker 330 (such as for voice data) or is processed by the processor 340 (such as for web browsing data).

TX processing circuitry in the transceiver(s) 310 and/or processor 340 receives analog or digital voice data from the microphone 320 or other outgoing baseband data (such as web data, e-mail, or interactive video game data) from the processor 340. The TX processing circuitry encodes, multiplexes, and/or digitizes the outgoing baseband data to generate a processed baseband or IF signal. The transceiver(s) 310 up-converts the baseband or IF signal to an RF signal that is transmitted via the antenna(s) 305.

The processor 340 can include one or more processors or other processing devices and execute the OS 361 stored in the memory 360 in order to control the overall operation of the UE 116. For example, the processor 340 could control the reception of DL channel signals and the transmission of UL channel signals by the transceiver(s) 310 in accordance with well-known principles. In some embodiments, the processor 340 includes at least one microprocessor or microcontroller.

In various embodiments, the processor 340 may execute processes to perform reporting of CSI associated with sub-configurations in wireless communication systems as described in greater detail below. The processor 340 can move data into or out of the memory 360 as required by an executing process. In some embodiments, the processor 340 is configured to execute the applications 362 based on the OS 361 or in response to signals received from gNBs or an operator. The processor 340 is also coupled to the I/O interface 345, which provides the UE 116 with the ability to connect to other devices, such as laptop computers and handheld computers. The I/O interface 345 is the communication path between these accessories and the processor 340.

The processor 340 is also coupled to the input 350 and the display 355m which includes for example, a touchscreen, keypad, etc., The operator of the UE 116 can use the input 350 to enter data into the UE 116. The display 355 may be a liquid crystal display, light emitting diode display, or other display capable of rendering text and/or at least limited graphics, such as from web sites.

The memory 360 is coupled to the processor 340. Part of the memory 360 could include a random-access memory (RAM), and another part of the memory 360 could include a Flash memory or other read-only memory (ROM).

Although FIGURE 3 illustrates one example of UE 116, various changes may be made to FIGURE 3. For example, various components in FIGURE 3 could be combined, further subdivided, or omitted and additional components could be added according to particular needs. As a particular example, the processor 340 could be divided into multiple processors, such as one or more central processing units (CPUs) and one or more graphics processing units (GPUs). In another example, the transceiver(s) 310 may include any number of transceivers and signal processing chains and may be connected to any number of antennas. Also, while FIGURE 3 illustrates the UE 116 configured as a mobile telephone or smartphone, UEs could be configured to operate as other types of mobile or stationary devices.

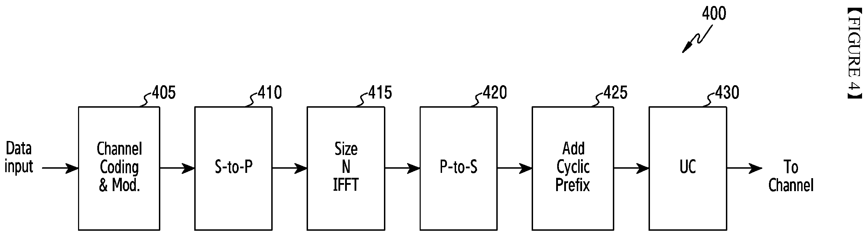

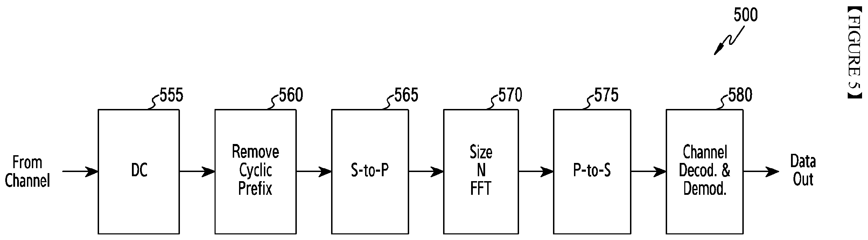

FIGURE 4 and FIGURE 5 illustrate example wireless transmit and receive paths according to various embodiments of the present disclosure. In the following description, a transmit path 400 may be described as being implemented in a gNB (such as the gNB 102), while a receive path 500 may be described as being implemented in a UE (such as a UE 116). However, it may be understood that the receive path 500 can be implemented in a gNB and that the transmit path 400 can be implemented in a UE.

The transmit path 400 as illustrated in FIGURE 4 includes a channel coding and modulation block 405, a serial-to-parallel (S-to-P) block 410, a size N inverse fast Fourier transform (IFFT) block 415, a parallel-to-serial (P-to-S) block 420, an add cyclic prefix block 425, and an up-converter (UC) 430. The receive path 500 as illustrated in FIGURE 5 includes a downconverter (DC) 555, a remove cyclic prefix block 560, a serial-to-parallel (S-to-P) block 565, a size N fast Fourier transform (FFT) block 570, a parallel-to-serial (P-to-S) block 575, and a channel decoding and demodulation block 580.

As illustrated in FIGURE 4, the channel coding and modulation block 405 receives a set of information bits, applies coding (such as a low-density parity check (LDPC) coding), and modulates the input bits (such as with quadrature phase shift keying (QPSK) or quadrature amplitude modulation (QAM)) to generate a sequence of frequency-domain modulation symbols.

The serial-to-parallel block 410 converts (such as de-multiplexes) the serial modulated symbols to parallel data in order to generate N parallel symbol streams, where N is the IFFT/FFT size used in the gNB 102 and the UE 116. The size N IFFT block 415 performs an IFFT operation on the N parallel symbol streams to generate time-domain output signals. The parallel-to-serial block 420 converts (such as multiplexes) the parallel time-domain output symbols from the size N IFFT block 415 in order to generate a serial time-domain signal. The add cyclic prefix block 425 inserts a cyclic prefix to the time-domain signal. The up-converter 430 modulates (such as up-converts) the output of the add cyclic prefix block 425 to an RF frequency for transmission via a wireless channel. The signal may also be filtered at baseband before conversion to the RF frequency.

A transmitted RF signal from the gNB 102 arrives at the UE 116 after passing through the wireless channel, and reverse operations to those at the gNB 102 are performed at the UE 116.

As illustrated in FIGURE 5, the downconverter 555 down-converts the received signal to a baseband frequency, and the remove cyclic prefix block 560 removes the cyclic prefix to generate a serial time-domain baseband signal. The serial-to-parallel block 565 converts the time-domain baseband signal to parallel time domain signals. The size N FFT block 570 performs an FFT algorithm to generate N parallel frequency-domain signals. The parallel-to-serial block 575 converts the parallel frequency-domain signals to a sequence of modulated data symbols. The channel decoding and demodulation block 580 demodulates and decodes the modulated symbols to recover the original input data stream.

Each of the gNBs 101-103 may implement a transmit path 400 as illustrated in FIGURE 4 that is analogous to transmitting in the downlink to UEs 111-116 and may implement a receive path 500 as illustrated in FIGURE 5 that is analogous to receiving in the uplink from UEs 111-116. Similarly, each of UEs 111-116 may implement the transmit path 400 for transmitting in the uplink to the gNBs 101-103 and may implement the receive path 500 for receiving in the downlink from the gNBs 101-103.

Each of the components in FIGURE 4 and FIGURE 5 can be implemented using only hardware or using a combination of hardware and software/firmware. As a particular example, at least some of the components in FIGURES 4 and FIGURE 5 may be implemented in software, while other components may be implemented by configurable hardware or a mixture of software and configurable hardware. For instance, the FFT block 570 and the IFFT block 415 may be implemented as configurable software algorithms, where the value of size N may be modified according to the implementation.

Furthermore, although described as using FFT and IFFT, this is by way of illustration only and may not be construed to limit the scope of this disclosure. Other types of transforms, such as discrete Fourier transform (DFT) and inverse discrete Fourier transform (IDFT) functions, can be used. It may be appreciated that the value of the variable N may be any integer number (such as 1, 2, 3, 4, or the like) for DFT and IDFT functions, while the value of the variable N may be any integer number that is a power of two (such as 1, 2, 4, 8, 16, or the like) for FFT and IFFT functions.

Although FIGURE 4 and FIGURE 5 illustrate examples of wireless transmit and receive paths, various changes may be made to FIGURE 4 and FIGURE 5. For example, various components in FIGURE 4 and FIGURE 5 can be combined, further subdivided, or omitted and additional components can be added according to particular needs. Also, FIGURE 4 and FIGURE 5 are meant to illustrate examples of the types of transmit and receive paths that can be used in a wireless network. Any other suitable architectures can be used to support wireless communications in a wireless network.

A unit for DL signaling or for UL signaling on a cell is referred to as a slot and can include one or more symbols. A bandwidth (BW) unit is referred to as a resource block (RB). One RB includes a number of sub-carriers (SCs). For example, a slot can have duration of one millisecond and an RB can have a bandwidth of 180 KHz and include 12 SCs with inter-SC spacing of 15 KHz. A slot can be either full DL slot, or full UL slot, or hybrid slot similar to a special subframe in time division duplex (TDD) systems.

DL signals include data signals conveying information content, control signals conveying DL control information (DCI), and reference signals (RS) that are also known as pilot signals. A gNB transmits data information or DCI through respective physical DL shared channels (PDSCHs) or physical DL control channels (PDCCHs). A PDSCH or a PDCCH can be transmitted over a variable number of slot symbols including one slot symbol. A UE can be indicated a spatial setting for a PDCCH reception based on a configuration of a value for a TCI state of a CORESET where the UE receives the PDCCH. The UE can be indicated a spatial setting for a PDSCH reception based on a configuration by higher layers or based on an indication by a DCI format scheduling the PDSCH reception of a value for a TCI state. The gNB can configure the UE to receive signals on a cell within a DL bandwidth part (BWP) of the cell DL BW.

A gNB transmits one or more of multiple types of RS including channel state information RS (CSI-RS) and demodulation RS (DMRS). A CSI-RS is primarily intended for UEs to perform measurements and provide channel state information (CSI) to a gNB. For channel measurement, non-zero power CSI-RS (NZP CSI-RS) resources are used. For interference measurement reports (IMRs), CSI interference measurement (CSI-IM) resources associated with a zero power CSI-RS (ZP CSI-RS) configuration are used. A CSI process includes NZP CSI-RS and CSI-IM resources. A UE can determine CSI-RS transmission parameters through DL control signaling or higher layer signaling, such as a radio resource control (RRC) signaling from a gNB. Transmission instances of a CSI-RS can be indicated by DL control signaling or configured by higher layer signaling. A DMRS is transmitted only in the BW of a respective PDCCH or PDSCH and a UE can use the DMRS to demodulate data or control information.

UL signals also include data signals conveying information content, control signals conveying UL control information (UCI), DMRS associated with data or UCI demodulation, sounding RS (SRS) enabling a gNB to perform UL channel measurement, and a random access (RA) preamble enabling a UE to perform random access. A UE transmits data information or UCI through a respective physical UL shared channel (PUSCH) or a physical UL control channel (PUCCH). A PUSCH or a PUCCH can be transmitted over a variable number of slot symbols including one slot symbol. The gNB can configure the UE to transmit signals on a cell within an UL BWP of the cell UL BW.

UCI includes hybrid automatic repeat request acknowledgement (HARQ-ACK) information, indicating correct or incorrect detection of data transport blocks (TBs) in a PDSCH, scheduling request (SR) indicating whether a UE has data in the buffer of UE, and CSI reports enabling a gNB to select appropriate parameters for PDSCH or PDCCH transmissions to a UE. HARQ-ACK information can be configured to be with a smaller granularity than per TB and can be per data code block (CB) or per group of data CBs where a data TB includes a number of data CBs.

A CSI report from a UE can include a channel quality indicator (CQI) informing a gNB of a largest modulation and coding scheme (MCS) for the UE to detect a data TB with a predetermined block error rate (BLER), such as a 10% BLER, of a precoding matrix indicator (PMI) informing a gNB how to combine signals from multiple transmitter antennas in accordance with a MIMO transmission principle, and of a rank indicator (RI) indicating a transmission rank for a PDSCH. UL RS includes DMRS and SRS. DMRS is transmitted only in a BW of a respective PUSCH or PUCCH transmission. A gNB can use a DMRS to demodulate information in a respective PUSCH or PUCCH. SRS is transmitted by a UE to provide a gNB with an UL CSI and, for a TDD system, an SRS transmission can also provide a PMI for DL transmission. Additionally, in order to establish synchronization or an initial higher layer connection with a gNB, a UE can transmit a physical random-access channel.

In the present disclosure, a beam is determined by either of: (1) a TCI state, which establishes a quasi-colocation (QCL) relationship between a source reference signal (e.g., synchronization signal/physical broadcasting channel (PBCH) block (SSB) and/or CSI-RS) and a target reference signal; or (2) spatial relation information that establishes an association to a source reference signal, such as SSB or CSI-RS or SRS. In either case, the ID of the source reference signal identifies the beam.

The TCI state and/or the spatial relation reference RS can determine a spatial Rx filter for reception of downlink channels at the UE, or a spatial Tx filter for transmission of uplink channels from the UE.

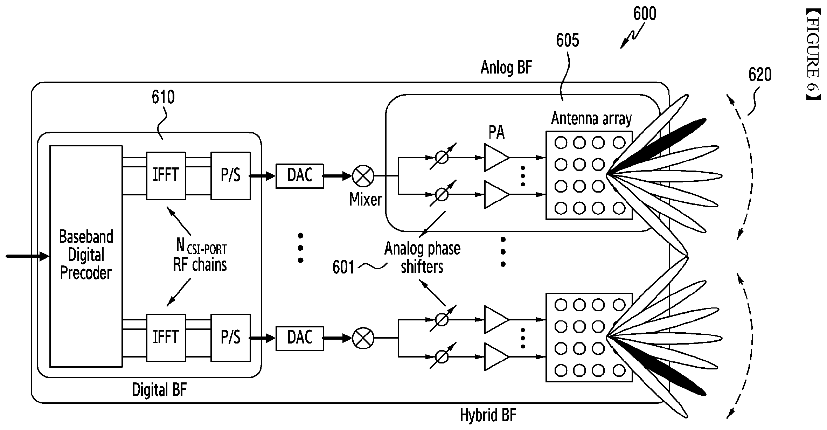

Rel. 14 LTE and Rel.15 NR support up to 32 CSI-RS antenna ports which enable an eNB to be equipped with a large number of antenna elements (such as 64 or 128). In this case, a plurality of antenna elements is mapped onto one CSI-RS port. For mmWave bands, although the number of antenna elements can be larger for a given form factor, the number of CSI-RS ports - which can correspond to the number of digitally precoded ports - tends to be limited due to hardware constraints (such as the feasibility to install a large number of ADCs/DACs at mmWave frequencies) as illustrated in FIGURE 6.

FIGURE 6 illustrates an example antenna structure 600 according to various embodiments of the present disclosure. An embodiment of the antenna structure 600 shown in FIGURE 6 is for illustration only.

MIMO technologies have a key role in boosting system throughput both in NR and LTE and such a role may continue and further expand in the future generations of wireless technologies.

For MIMO operation, an antenna port is defined such that a channel over which a symbol on the antenna port is conveyed can be inferred from the channel over which another symbol on the same antenna port is conveyed. There is not necessarily a one to one correspondence between an antenna port and an antenna element, and a plurality of antenna elements can be mapped onto one antenna port.

In this case, one CSI-RS port is mapped onto a large number of antenna elements which can be controlled by a bank of analog phase shifters 601. One CSI-RS port can then correspond to one sub-array which produces a narrow analog beam through analog beamforming 605. This analog beam can be configured to sweep across a wider range of angles 620 by varying the phase shifter bank across symbols or subframes. The number of sub-arrays (equal to the number of RF chains) is the same as the number of CSI-RS ports $N_{CSI-PORT}$. A digital beamforming unit 610 performs a linear combination across $N_{CSI-PORT}$ analog beams to further increase precoding gain. While analog beams are wideband (hence not frequency-selective), digital precoding can be varied across frequency sub-bands or resource blocks. Receiver operation can be conceived analogously.

In 5G networks, a gNB is typically equipped with tens of transceivers (TXRUs). The large number of TXRUs enhances network performance, while also put high requirement for the gNB processing capability, such as precoding weight calculation for a DL transmission, or equalization in a UL data reception.

One embodiment to reduce the computation complexity is to perform port reduction, so that the equalization operates on smaller data dimension compared to the Rx antenna number. How to reduce the number of ports/data dimension is a design trade-off between complexity and performance.

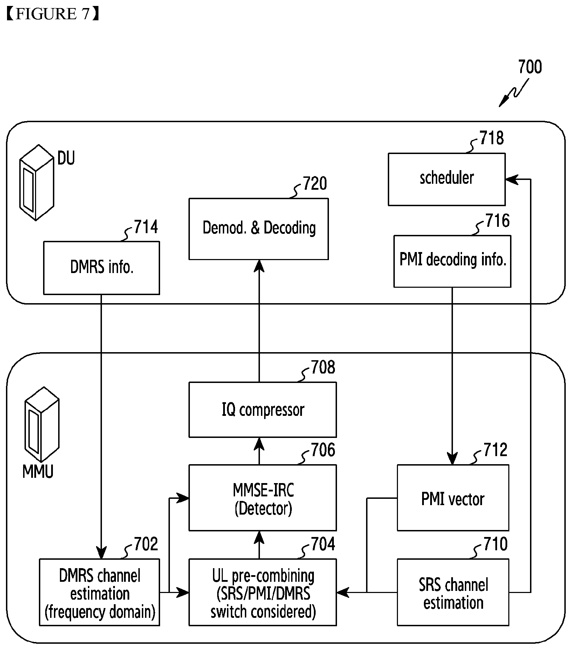

FIGURE 7 illustrates an example of a receiver structure 700 for reducing a number of ports/data dimensions according to various embodiments of the present disclosure. An embodiment of the receiver structure 700 shown in FIGURE 7 is for illustration only. One or more of the components illustrated in FIGURE 7 can be implemented in specialized circuitry configured to perform the noted functions or one or more of the components can be implemented by one or more processors executing instructions to perform the noted functions.

As illustrated in FIGURE 7, the receiver comprises a DU and MMU. The DU comprises a DMRS information block 714, a demodulation and decoding block 720, a scheduler 718, and a PMI decoding information block 716. The MMU comprises a DMRS channel estimation block 702, an IQ compressor block 708, MMSE-IRC block 706, a UL pre-combining block 704, a PMI vector block 712, and an SRS channel estimation block 710.

The DMRS information is passed from the DU to the MMU. Inside the MMU, a channel may be estimated according to the DMRS. The received data is then pre-combined/dimension-reduced using PMI/SRS/DMRS/common beam information. The reception data is then equalized and demodulated. When compressing the data dimension, it is desired to preserve or improve the performance of full-port reception.

In some systems, a common beam based combining often suffers from loss due to inadaptable combining weight, an SRS-based MRC is not for low signal to noise ratio (SNR) or high interference or high mobility, a PMI based combining is complement to SRS-based combining; and a DMRS-based port reduction is considered to help channel aging issue but not low signal-to-interference ratio (SINR).

In one embodiment, below example are provided for a signal model by separating the system operation into channel estimation stage and data reception stage.

In one example of channel estimation, the noisy DMRS is received at the gNB side. After RS removal, the noisy channel can be written as $\tilde{H}_{N_r \times N_f} = H_{N_r \times N_f} + N$ where $N_r$ is the number of gNB Rx antennas, $N_f$ is the number of frequency resource elements occupied by the DMRS, and $N$ denotes the rx noise.

The DMRS channel estimation in a frequency domain can be written as below, with $W_f^H$ denoting the estimation weights:
$$\hat{H} = \tilde{H} W_f^H = H + N_1.$$

In one embodiment, spatial port reduction is provided on top of channel estimation, with compression weight C of dimension $[P \times N_r]$, P as the target number of ports to be reduced to, the effective estimated channel can be written as

$$\widehat{H}_{eff_{N_r \times N_f}} = C\widehat{H} = CH + CN_2 = H_{eff} + N_{eff}.$$

In one example, the same compression weight **C** is applied to both the RS and the data.

In one example of a data reception (SU example), SU-MIMO case is provided. In such example, the received signal, $L$ layers on $N_r$ rx antennas, for one single RE, the received signal can be expressed as $y_{N_r \times 1} = H_{N_r \times L}x_{L \times 1} + n_d$ where $H_{N_r \times L}$ is the channel on the particular RE, and $x_{L \times 1}$ is the data transmitted.

After compression, the received signal reduces to $y_{eff[P \times L]} = H_{eff[P \times L]}x_{L \times 1} + n_{d_{P \times 1}}$.

Estimated channel is used to perform equalization. Assuming MMSE equalization weight $\widehat{W}_e = \widehat{H}_{eff}^H (\widehat{H}_{eff}\widehat{H}_{eff}^H + \sigma_d^2 I)^{-1}$, the performance metric is the received data mse per layer which is a function of the estimated channel, as shown: $MSE(\widehat{H}_{eff}) = |\widehat{w}_{e,i}^H H_{eff} - 1|^2 + |\widehat{w}_{e,i}|^2 \sigma_d^2 \approx \frac{\sigma_d^2}{|Ch|^2 + \sigma_d^2} + \frac{\sigma_0^2/\rho_{ce}}{(|Ch|^2 + \sigma_d^2)^2}$.

In order to achieve the better performance, in one embodiment, a joint design of port reduction and DMRS channel estimation considering scheduling is provided. To be specific, it may be considered that the spatial channel components is most significant for data equalization, and only keep those components for the channel estimation. The port reduction can be associated with spatial/antenna domain CE, as both try to preserve spatial channel in lower-dimension representation.

The channel can be projected onto different set of bases. The bases that capture the largest energy can be used as the compression coefficients.

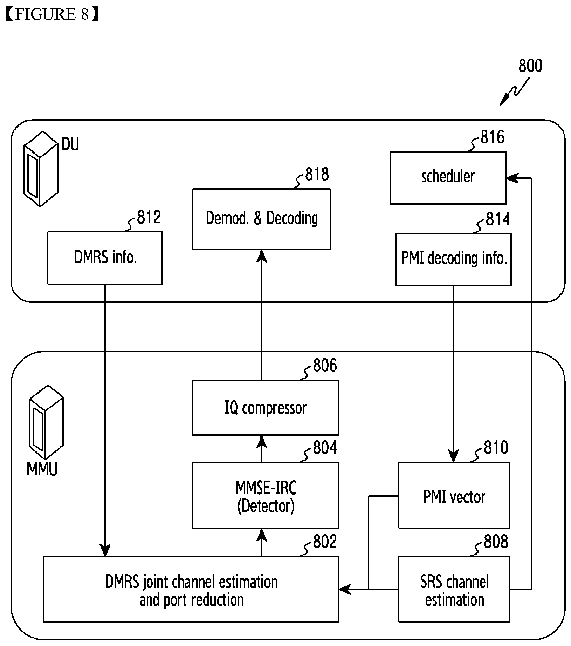

Given a joint CE and port reduction design, the system diagram can be drawn as illustrated in FIGURE 8.

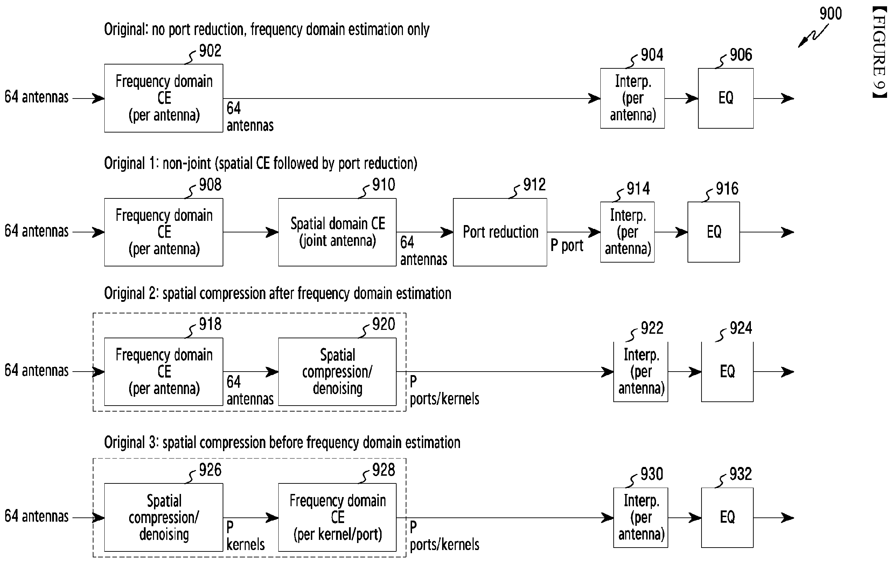

FIGURE 8 illustrates an example of joint CE and port reduction structure 800 according to various embodiments of the present disclosure. An embodiment of the joint CE and port reduction structure 800 shown in FIGURE 9 is for illustration only. One or more of the components illustrated in FIGURE 8 can be implemented in specialized circuitry configured to perform the noted functions or one or more of the components can be implemented by one or more processors executing instructions to perform the noted functions.

As illustrated in FIGURE 8, the system comprises a DU and MMU. The DU comprises a DMRS information block 812, a demodulation and decoding block 818, a scheduler 816, and a PMI decoding information block 814. The MMU comprises a DMRS joint channel estimation and port reduction block 802, an IQ compressor block 806, MMSE-IRC block 804, a PMI vector block 810, and an SRS channel estimation block 808.

As illustrated in FIGURE 8, the joint estimation and port reduction block can have sub-blocks as illustrated in FIGURE 9.

FIGURE 9 illustrates an example of joint estimation and port reduction 900 according to various embodiments of the present disclosure. An embodiment of the joint estimation and port reduction 900 shown in FIGURE 9 is for illustration only. One or more of the components illustrated in FIGURE 9 can be implemented in specialized circuitry configured to perform the noted functions or one or more of the components can be implemented by one or more processors executing instructions to perform the noted functions.

The original indicates no port-reduction operation.

In structure of option 1, a spatial domain channel estimation follows the frequency domain CE, and then the spatial domain port reduction follows.

In structure of option 2, the spatial domain CE and port reduction are combined, and follows after the frequency domain CE.

In structure of option 3, the spatial domain CE and port reduction are combined, and operates before the frequency domain CE.

Below describes some operation examples of the option 3. Assuming a general model, the received signal may include intra-cell MU (channel can be estimated) and inter-cell interference (in general channel unknown): $y = H_0x_0 + H_1x_1 + H_Ix_I + n$ where $H_0x_0$ and $H_1x_1$ are the two target signals multiplexed together, being intra-cell interference with each, $H_Ix_I$ denotes the inter-cell interference, and **n** being the receiver noise.

Interference handling is a key consideration in port reduction design (often not explicitly handled in CE).

As illustrated in FIGURE 9, in original structure, an output is transmitted to block 904 (per antenna) from the frequency domain CE block 902, and the output of block 904 is transmitted to an EQ block 906.

As illustrated in FIGURE 9, in option 1 structure, an output of the frequency domain block 908 is transmitted to the spatial domain block 910. The output of the spatial domain block is transmitted to the port reduction block 912. The output of the port reduction block 912 is transmitted to the EQ block 916 through the block 914.

As illustrated in FIGURE 9, in option 2 structure, an output of the frequency domain block 918 is transmitted to the spatial compression/denoising block 920. The output of the spatial compression/denoising block 920 is transmitted to the EQ block 924 through the block 922.

As illustrated in FIGURE 9, in option 3 structure, an output of the spatial compression/denoising block 926 is transmitted to the frequency domain block 928. The output of the frequency domain block 928 is transmitted to the EQ block 932 through the block 930.

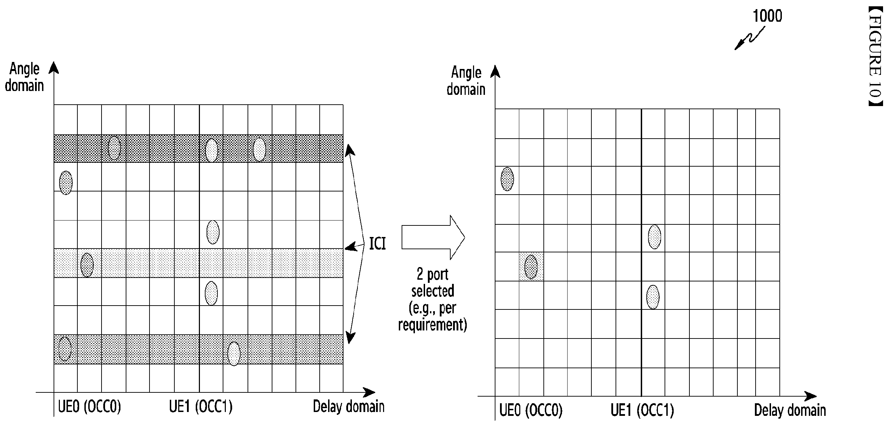

For DMRS, after scrambling removal (before OCC removal), UEs in one cell are (configured) to be orthogonal in delay domain; for ICI UEs, they are white (similar power) in delay w.r.t. angle bins as illustrated in FIGURE 10.

FIGURE 10 illustrates an example of an angle domain and delay domain 1000 according to various embodiments of the present disclosure. An embodiment of the angle domain and delay domain 1000 shown in FIGURE 10 is for illustration only.

In one embodiment, two possible designs for compression matrix are provide: (1) a cell-specific (common for UEs in a cell) design and a UE-specific design.

In one example of a UE-specific design (w/o ICI for presentation simplicity), compression matrix $B_0$ and $B_1$ are applied for UE0 and UE1: $y_{0,eq} = B_0 y = B_0 H_0 x_0 + B_0 H_1 x_1 + B_0 n$ and $y_{1,eq} = B_1 y = B_1 H_0 x_0 + B_1 H_1 x_1 + B_1 n$.

During (freq. domain) channel estimation, following are estimated: $\hat{H}_{0,eq} \approx B_0 H_0$, $\hat{H}_{1,eq} \approx B_1 H_1$. In such example,

signal model used for EQ is: $$y_{0,eq} = \hat{H}_{0,eq} x_0 + (B_0 B_1^H) \cdot \hat{H}_{1,eq} x_1 + n_0 \quad \text{and}$$

$$y_{1,eq} = \hat{H}_{1,eq} x_1 + (B_1 B_0^H) \cdot \hat{H}_{0,eq} x_0 + n_1.$$

In one example, it may be used that $H_i \approx B_i^H \hat{H}_{i,eq}$, i.e., in spatial CE, original dimension may be considered.

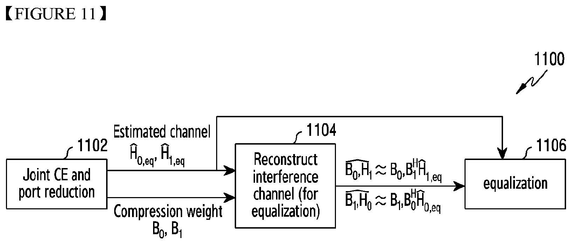

In one example, MMSE-IRC EQ can be derived as illustrated in FIGURE 11.

FIGURE 11 illustrates an example of compression matrix 1100 according to various embodiments of the present disclosure. An embodiment of the compression matrix 1100 shown in FIGURE 11 is for illustration only. One or more of the components illustrated in FIGURE 11 can be implemented in specialized circuitry configured to perform the noted functions or one or more of the components can be implemented by one or more processors executing instructions to perform the noted functions.

As illustrated in FIGURE 11, the join CE and port reduction block 1102 transmit, to the reconstruct interference channel block 1104, information for the estimated channel and the compression weight. In one example, the information for estimated channel is transmitted to the equalization block 1106. The output of the reconstruct interference channel block 1104 is transmitted to the equalization block 1106.

In one embodiment, to obtain the compression matrix, some channel knowledges are reauired as shown below.

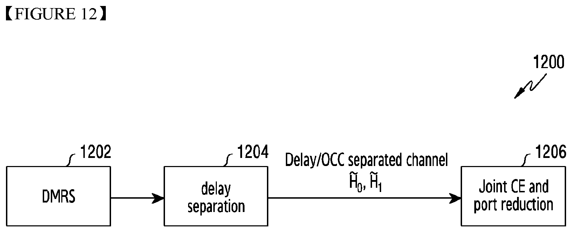

In one example, in option 3 as illustrated in FIGURE 9, the compression is performed before the freq.-domain CE block 928. In such example, "coarse" channel information can be obtained from delay domain separated DMRS as illustrated in FIGURE 12.

FIGURE 12 illustrates another example of compression matrix 1200 according to various embodiments of the present disclosure. An embodiment of the compression matrix 1200 shown in FIGURE 12 is for illustration only. One or more of the components illustrated in FIGURE 12 can be implemented in specialized circuitry configured to perform the noted functions or one or more of the components can be implemented by one or more processors executing instructions to perform the noted functions.

As illustrated in FIGURE 12, a signal is transmitted to the delay/separation block 1204 from the DMRS block 1202. The signal of delay/OCC separated channel is transmitted to the joint CE and port reduction block 1206 from the delay separation block 1204.

In one embodiment, compression matrix methods can be provided with: (1) AI-based estimation; (2) CM-based operation; and (3) UE-specific signal-to-leakage and noise ratio (SLNR) maximization (eigen-space) operation.

In one embodiment of the CM-based operation, a set of orthogonal bases are generated according to canonical representation of the channel. For instance, DFT beams with different offsets can be one set of orthogonal bases. The DFT beams can be constructed matching the dimension of one polarization or matching the dimension of total antennas.

In an SU case (no intra-cell interference), the user selects for best P beams from an orthogonal group. The selection can be based on projected channel power on the beams. If the bases are in the dimension of the one polarization, the projected power on each beam contains the total power of 2 polarizations.

In another example, P beams are selected from each group, and then the group containing the best overall power is selected. In yet another example, the best beam is selected, then the bases set containing that beam is fixed, and then the rest of the beams is selected from the group.

When considering the inter-cell interference, the inter-cell-interference can be identified from the example graph above. Inter-cell interference power per beam can be estimated from the spatial beams with "white" delay domain response. The beam selection can be modified by taking consideration of the interference penalty.

When intra-cell MU interference is also in place, the port reduction may drop the beams with large inter-cell and also intra-cell interference as illustrated.

In one embodiment, SLNR criteria is provided as shown:

With compression weight, same-cell interferer already partially suppressed

$$\boldsymbol{y}_{0,eq} = \hat{\boldsymbol{H}}_{0,eq}\boldsymbol{x}_0 + (B_0 B_1^H) \cdot \hat{\boldsymbol{H}}_{1,eq}\boldsymbol{x}_1 + \boldsymbol{n}_0$$
$$\boldsymbol{y}_{1,eq} = \hat{\boldsymbol{H}}_{1,eq}\boldsymbol{x}_1 + (B_1 B_0^H) \cdot \hat{\boldsymbol{H}}_{0,eq}\boldsymbol{x}_0 + \boldsymbol{n}_1$$

In such criteria, $\boldsymbol{B}_0$ and $\boldsymbol{B}_1$ can be designed to amplify the target UE with suppressed leakage on the interferer UE, e.g., following maximizing SLNR criteria: $\boldsymbol{B}_{i,SLNR} = \boldsymbol{arg} \max \dfrac{||B_i H_i||_F^2}{\sigma^2 + \sum_{k \neq i}||B_k H_i||_F^2}$ .

For SU case, no MU interference is considered, so the most dominant eigen directions are selected as the compression bases.

The original indicates no port-reduction operation.

In structure of option 1 as illustrated in FIGURE 9, a spatial domain channel estimation follows the frequency domain CE, and then the spatial domain port reduction follows.

In structure of option 2 as illustrated in FIGURE 9, the spatial domain CE and port reduction are combined, and follows after the frequency domain CE.

In structure of option 3 as illustrated in FIGURE 9, the spatial domain CE and port reduction are combined, and operates before the frequency domain CE.

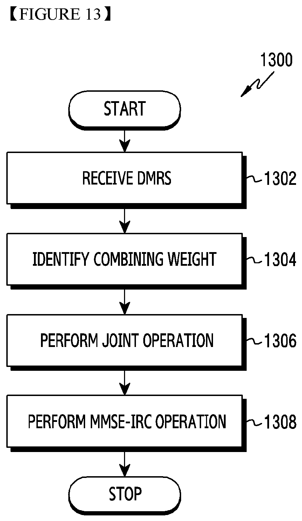

FIGURE 13 illustrates a flowchart of a method 1300 for joint channel estimation and port reduction for an uplink data reception according to various embodiments of the present disclosure. The method 1300 as may be performed by a base station (e.g., , 101-103 as illustrated in FIGURE 1). An embodiment of the method 1300 shown in FIGURE 13 is for illustration only. One or more of the components illustrated in FIGURE 13 can be implemented in specialized circuitry configured to perform the noted functions or one or more of the components can be implemented by one or more processors executing instructions to perform the noted functions.

As illustrated in FIGURE 13, the method 1300 begins at step 1302. In step, 1302, a BS receives, from a UE via an MMU, a DMRS.

Subsequently, in step 1304, the BS identifies a combining weight based on the DMRS.

Next, in step 1306, the BS performs, based on the combining weight, a joint operation that performs a port reduction operation and a DMRS CE.

Finally, in step 1308, the BS performs, based on the joint operation, a MMSE-IRC operation, in a reduce antenna dimension, for a data reception and the DMRS CE.

In one embodiment, the BS identifies, based on scheduling information, at least one compression weight for the joint operation. In such embodiments, the scheduling information is associated with a reception of an SINR to reduce interference and the at least one compression weight is identified to increase the SINR for the data reception.

In one embodiment, the SINR is identified for a SU operation and the interference is identified for an MU operation, and the SU operation and the MU operation are identified based on the scheduling information.

In one embodiment, the BS identifies at least one channel component for a data equalization operation and maintains the at least one channel component for the DMRS CE.

In one embodiment, the BS performs, based on scheduling information, the joint operation for preserving dominant components in a transformed domain including spatial resources in a spatial domain and an angle domain.

In one embodiment, the BS transforms a signal or project the signal into a transformed domain including a spatial domain and an angle domain, denoise at least one coefficient of kernel based on a SNR of the kernel included in a set of kernels, constructs a channel based on the kernel including the denoised at least one coefficient and the projected basis, and selects spatial kernels including a higher SNR than other kernels included in the set of kernels for performing an equalization operation.

In one embodiment, the BS identifies a compression matrix including a UE-specific matrix and a cell-specific matrix based on (i) AI-based estimation, CM-based estimation, or a UE-specific SLNR maximization operation.

In such embodiment, the compression matrix is obtained before performing a frequency domain CE and coarse channel information is obtained from a delay domain separated DMRS.

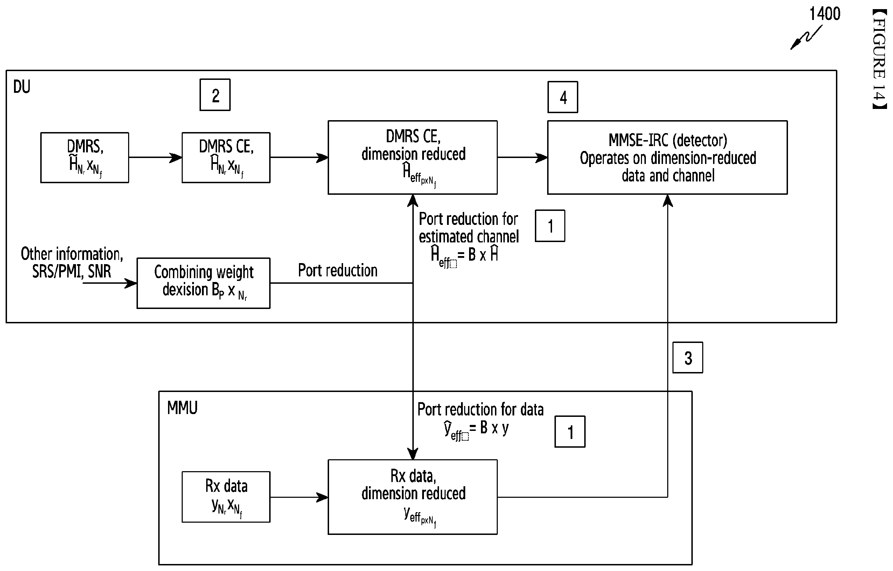

FIGURE 14 illustrates an example of port reduction signal flow 1400. The port reduction signal flow 1400 as may be performed by a base station (e.g., 101-103 as illustrated in FIGURE 1). An embodiment of the port reduction signal flow 1400 shown in FIGURE 14 is for illustration only. One or more of the components illustrated in FIGURE 14 can be implemented in specialized circuitry configured to perform the noted functions or one or more of the components can be implemented by one or more processors executing instructions to perform the noted functions.

As illustrated in FIGURE 14, the port reduction for data reception and channel estimation happens in different components of the gNB. in step 1, a port reduction compresses the data dimension from number of antennas $N_r$ to number of required ports P. In step 2, channel estimation is performed on dimension of number of antennas. In step 3, with the port reduction, the signal is exchanged between MMU and DU is of reduced dimension. In step 4, the MMSE detector also operates on the reduced channel/data dimension.

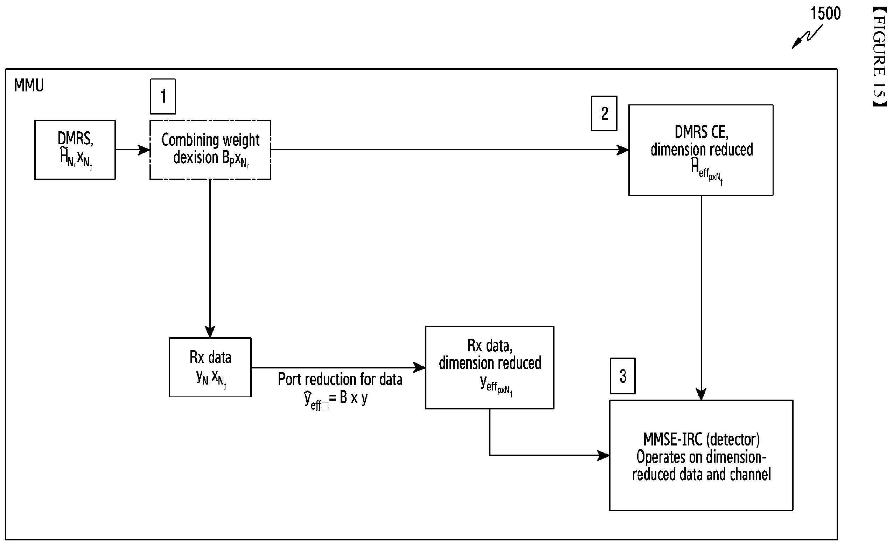

FIGURE 15 illustrates an example of joint DMRS CE and port reduction signal flow 1500 according to various embodiments of the present disclosure. The DMRS CE and port reduction signal flow 1500 as may be performed by a base station (e.g., , 101-103 as illustrated in FIGURE 1). An embodiment of the DMRS CE and port reduction signal flow 1500 shown in FIGURE 15 is for illustration only. One or more of the components illustrated in FIGURE 15 can be implemented in specialized circuitry configured to perform the noted functions or one or more of the components can be implemented by one or more processors executing instructions to perform the noted functions.

As illustrated in FIGURE 15, in step 1, a port-reduction/combining weight decision is placed after receiving a demodulation reference signal (DMRS) and DMRS is compressed before DMRS channel estimation. In step 2, the port reduction and CE are processed jointly. In steps 1 and 2, the port reduction compression weight is determined based on received DMRS without explicit channel estimation. With this structure, the channel estimation is performed on the reduced dimension instead of a full-antenna dimension, which reduces the complexity as well as improves the CE SNR. In steps 2 and 3, the channel estimation and data equalization are both reduced in complexity.

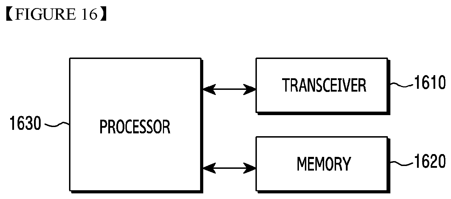

FIGURE 16 illustrates a block diagram of a terminal (or a user equipment (UE)), according to embodiments of the present disclosure. FIGURE 16 corresponds to the example of the UE of FIGURE 3.

As shown in FIGURE 16, the UE according to an embodiment may include a transceiver 1610, a memory 1620, and a processor 1630. The transceiver 1610, the memory 1620, and the processor 1630 of the UE may operate according to a communication method of the UE described above. However, the components of the UE are not limited thereto. For example, the UE may include more or fewer components than those described above. In addition, the processor 1630, the transceiver 1610, and the memory 1620 may be implemented as a single chip. Also, the processor 1630 may include at least one processor.

The transceiver 1610 collectively refers to a UE receiver and a UE transmitter, and may transmit/receive a signal to/from a base station or a network entity. The signal transmitted or received to or from the base station or a network entity may include control information and data. The transceiver 1610 may include a RF transmitter for up-converting and amplifying a frequency of a transmitted signal, and a RF receiver for amplifying low-noise and down-converting a frequency of a received signal. However, this is only an example of the transceiver 1610 and components of the transceiver 1610 are not limited to the RF transmitter and the RF receiver.

Also, the transceiver 1610 may receive and output, to the processor 1630, a signal through a wireless channel, and transmit a signal output from the processor 1630 through the wireless channel.

The memory 1620 may store a program and data required for operations of the UE. Also, the memory 1620 may store control information or data included in a signal obtained by the UE. The memory 1620 may be a storage medium, such as read-only memory (ROM), random access memory (RAM), a hard disk, a CD-ROM, and a DVD, or a combination of storage media.

The processor 1630 may control a series of processes such that the UE operates as described above. For example, the transceiver 1610 may receive a data signal including a control signal transmitted by the base station or the network entity, and the processor 1630 may determine a result of receiving the control signal and the data signal transmitted by the base station or the network entity.

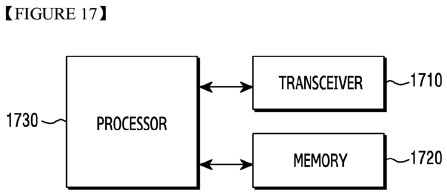

FIGURE 17 illustrates a block diagram of a base station, according to embodiments of the present disclosure. FIGURE 17 corresponds to the example of the RAN node of FIGURE 2.

As shown in FIGURE 17, the base station according to an embodiment may include a transceiver 1710, a memory 1720, and a processor 1730. The transceiver 1710, the memory 1720, and the processor 1730 of the base station may operate according to a communication method of the base station described above. However, the components of the base station are not limited thereto. For example, the base station may include more or fewer components than those described above. In addition, the processor 1730, the transceiver 1710, and the memory 1720 may be implemented as a single chip. Also, the processor 1730 may include at least one processor.

The transceiver 1710 collectively refers to a base station receiver and a base station transmitter, and may transmit/receive a signal to/from a terminal or a network entity. The signal transmitted or received to or from the terminal or a network entity may include control information and data. The transceiver 1710 may include a RF transmitter for up-converting and amplifying a frequency of a transmitted signal, and a RF receiver for amplifying low-noise and down-converting a frequency of a received signal. However, this is only an example of the transceiver 1710 and components of the transceiver 1710 are not limited to the RF transmitter and the RF receiver.

Also, the transceiver 1710 may receive and output, to the processor 1730, a signal through a wireless channel, and transmit a signal output from the processor 1730 through the wireless channel.

The memory 1720 may store a program and data required for operations of the base station. Also, the memory 1720 may store control information or data included in a signal obtained by the base station. The memory 1720 may be a storage medium, such as read-only memory (ROM), random access memory (RAM), a hard disk, a CD-ROM, and a DVD, or a combination of storage media.

The processor 1730 may control a series of processes such that the base station operates as described above. For example, the transceiver 1710 may receive a data signal including a control signal transmitted by the terminal, and the processor 1730 may determine a result of receiving the control signal and the data signal transmitted by the terminal.

In one embodiment, a base station (BS) in a wireless communication system is provided. The BS comprises a transceiver configured to receive, from a user equipment (UE) via a multi-input multi-output unit (MMU), a demodulation reference signal (DMRS). The BS further comprises a processor operably coupled to the transceiver, the processor configured to: identify a combining weight based on the DMRS, perform, based on the combining weight, a joint operation that performs a port reduction operation and a DMRS channel estimation (CE), and perform, based on the joint operation, a minimum mean-square error interference rejection combining (MMSE-IRC) operation, in a reduce antenna dimension, for a data reception and the DMRS CE.

In another embodiment, the BS is provided. Wherein: the processor is further configured to identify, based on scheduling information, at least one compression weight for the joint operation; the scheduling information is associated with a reception of a signal-to-noise and interference ratio (SINR) to reduce interference; and the at least one compression weight is identified to increase the SINR for the data reception.

In another embodiment, the BS is provided. Wherein: the SINR is identified for a single-UE (SU) operation and the interference is identified for a multi-UEs (MU) operation; and the SU operation and the MU operation are identified based on the scheduling information.

In another embodiment, the BS is provided. Wherein the processor is further configured to: identify at least one channel component for a data equalization operation; and maintain the at least one channel component for the DMRS CE.

In another embodiment, the BS is provided. Wherein the processor is further configured to perform, based on scheduling information, the joint operation for preserving dominant components in a transformed domain including spatial resources in a spatial domain and an angle domain.

In another embodiment, the BS is provided. Wherein the processor is further configured to: transform a signal or project the signal into a transformed domain including a spatial domain and an angle domain; denoise at least one coefficient of kernel based on a signal-to-noise ratio (SNR) of the kernel included in a set of kernels; construct a channel based on the kernel including the denoised at least one coefficient and a projected basis; and select spatial kernels including a higher SNR than other kernels included in the set of kernels for performing an equalization operation.In another embodiment, the BS is provided. Wherein: the processor is further configured to identify a compression matrix including a UE-specific matrix and a cell-specific matrix based on (i) artificial intelligence (AI)-based estimation, Canonical model (CM)-based estimation, or a UE-specific signal-to-leakage and noise ratio (SLNR) maximization operation; the compression matrix is obtained before performing a frequency domain CE; and coarse channel information is obtained from a delay domain separated DMRS.

In one embodiment, a method of a BS in a wireless communication system is provided. The method comprising: receiving, from a UE via an MMU, a DMRS; identifying a combining weight based on the DMRS; performing, based on the combining weight, a joint operation that performs a port reduction operation and a DMRS CE; and performing, based on the joint operation, a MMSE-IRC operation, in a reduce antenna dimension, for a data reception and the DMRS CE.

In another embodiment, the method of BS is provided. The method further comprising: identifying, based on scheduling information, at least one compression weight for the joint operation, wherein the scheduling information is associated with a reception of a signal-to-noise and interference ratio (SINR) to reduce interference; and wherein the at least one compression weight is identified to increase the SINR for the data reception.

In another embodiment, the method of BS is provided. Wherein: the SINR is identified for a single-UE (SU) operation and the interference is identified for a multi-UEs (MU) operation; and the SU operation and the MU operation are identified based on the scheduling information.

In another embodiment, the method of BS is provided. The method further comprising: identifying at least one channel component for a data equalization operation; and maintaining the at least one channel component for the DMRS CE.

In another embodiment, the method of BS is provided. The method further comprising performing, based on scheduling information, the joint operation for preserving dominant components in a transformed domain including spatial resources in a spatial domain and an angle domain.

In another embodiment, the method of BS is provided. The method further comprising: transforming a signal or project the signal into a transformed domain including a spatial domain and an angle domain; denoising at least one coefficient of kernel based on a signal-to-noise ratio (SNR) of the kernel included in a set of kernels; constructing a channel based on the kernel including the denoised at least one coefficient and a projected basis; and selecting spatial kernels including a higher SNR than other kernels included in the set of kernels for performing an equalization operation.

In another embodiment, the method of BS is provided. The method further comprising identifying a compression matrix including a UE-specific matrix and a cell-specific matrix based on (i) artificial intelligence (AI)-based estimation, Canonical model (CM)-based estimation, or a UE-specific signal-to-leakage and noise ratio (SLNR) maximization operation, wherein: the compression matrix is obtained before performing a frequency domain CE; and coarse channel information is obtained from a delay domain separated DMRS.

In one embodiment, a non-transitory computer-readable medium comprising program code is provided. The computer-readable medium, that when executed by at least one processor, causes an electronic device to: receive, from a UE via a MMU, a DMRS; identify a combining weight based on the DMRS; perform, based on the combining weight, a joint operation that performs a port reduction operation and a DMRS CE; and perform, based on the joint operation, a MMSE-IRC operation, in a reduce antenna dimension, for a data reception and the DMRS CE.In another embodiment, the computer-readable medium is provided. The computer-readable medium further comprising program code, that when executed by at least one processor, causes an electronic device to identify, based on scheduling information, at least one compression weight for the joint operation, wherein the scheduling information is associated with a reception of a signal-to-noise and interference ratio (SINR) to reduce interference; wherein the at least one compression weight is identified to increase the SINR for the data reception; wherein the SINR is identified for a single-UE (SU) operation and the interference is identified for a multi-UEs (MU) operation; and wherein the SU operation and the MU operation are identified based on the scheduling information.

In another embodiment, the computer-readable medium is provided. The computer-readable medium further comprising program code, that when executed by at least one processor, causes an electronic device to: identify at least one channel component for a data equalization operation; and maintain the at least one channel component for the DMRS CE.

In another embodiment, the computer-readable medium is provided. The computer-readable medium further comprising program code, that when executed by at least one processor, causes an electronic device to perform, based on scheduling information, the joint operation for preserving dominant components in a transformed domain including spatial resources in a spatial domain and an angle domain.

In another embodiment, the computer-readable medium is provided. The computer-readable medium further comprising program code, that when executed by at least one processor, causes an electronic device to: transform a signal or project the signal into a transformed domain including a spatial domain and an angle domain; denoise at least one coefficient of kernel based on a signal-to-noise ratio (SNR) of the kernel included in a set of kernels; construct a channel based on the kernel including the denoised at least one coefficient and a projected basis; and select spatial kernels including a higher SNR than other kernels included in the set of kernels for performing an equalization operation.

In another embodiment, the computer-readable medium is provided. The computer-readable medium further comprising program code, that when executed by at least one processor, causes an electronic device to identify a compression matrix including a UE-specific matrix and a cell-specific matrix based on (i) artificial intelligence (AI)-based estimation, Canonical model (CM)-based estimation, or a UE-specific signal-to-leakage and noise ratio (SLNR) maximization operation, and wherein the compression matrix is obtained before performing a frequency domain CE; and wherein coarse channel information is obtained from a delay domain separated DMRS.

The above flowcharts illustrate example methods that can be implemented in accordance with the principles of the present disclosure and various changes could be made to the methods illustrated in the flowcharts herein. For example, while shown as a series of steps, various steps in each figure could overlap, occur in parallel, occur in a different order, or occur multiple times. In another example, steps may be omitted or replaced by other steps.

Although the present disclosure has been described with exemplary embodiments, various changes and modifications may be suggested to one skilled in the art. It is intended that the present disclosure encompass such changes and modifications as fall within the scope of the appended claims. None of the description in this application should be read as implying that any particular element, step, or function is an essential element that must be included in the claims scope. The scope of patented subject matter is defined by the claims.

**Claims**

1. A base station (BS) in a wireless communication system, the BS comprising:

    a transceiver configured to receive, from a user equipment (UE) via a multi-input multi-output unit (MMU), a demodulation reference signal (DMRS); and
    a processor operably coupled to the transceiver, the processor configured to:

        identify a combining weight based on the DMRS,

perform, based on the combining weight, a joint operation that performs a port reduction operation and a DMRS channel estimation (CE), and

perform, based on the joint operation, a minimum mean-square error interference rejection combining (MMSE-IRC) operation, in a reduce antenna dimension, for a data reception and the DMRS CE.

2. The BS of Claim 1, wherein:

the processor is further configured to identify, based on scheduling information, at least one compression weight for the joint operation;

the scheduling information is associated with a reception of a signal-to-noise and interference ratio (SINR) to reduce interference; and

the at least one compression weight is identified to increase the SINR for the data reception.

3. The BS of Claim 2, wherein:

the SINR is identified for a single-UE (SU) operation and the interference is identified for a multi-UEs (MU) operation; and

the SU operation and the MU operation are identified based on the scheduling information.

4. The BS of Claim 1, wherein the processor is further configured to:

identify at least one channel component for a data equalization operation; and

maintain the at least one channel component for the DMRS CE.

5. The BS of Claim 1, wherein the processor is further configured to perform, based on scheduling information, the joint operation for preserving dominant components in a transformed domain including spatial resources in a spatial domain and an angle domain.

6. The BS of Claim 1, wherein the processor is further configured to:

transform a signal or project the signal into a transformed domain including a spatial domain and an angle domain;

denoise at least one coefficient of kernel based on a signal-to-noise ratio (SNR) of the kernel included in a set of kernels;

construct a channel based on the kernel including the denoised at least one coefficient and a projected basis; and

select spatial kernels including a higher SNR than other kernels included in the set of kernels for performing an equalization operation.

7. The BS of Claim 1, wherein:

the processor is further configured to identify a compression matrix including a UE-specific matrix and a cell-specific matrix based on (i) artificial intelligence (AI)-based estimation, Canonical model (CM)-based estimation, or a UE-specific signal-to-leakage and noise ratio (SLNR) maximization operation;

the compression matrix is obtained before performing a frequency domain CE; and

coarse channel information is obtained from a delay domain separated DMRS.

8. A method of a base station (BS) in a wireless communication system, the method comprising:

receiving, from a user equipment (UE) via a multi-input multi-output unit (MMU), a demodulation reference signal (DMRS);

identifying a combining weight based on the DMRS;

performing, based on the combining weight, a joint operation that performs a port reduction operation and a DMRS channel estimation (CE); and

performing, based on the joint operation, a minimum mean-square error interference rejection combining (MMSE-IRC) operation, in a reduce antenna dimension, for a data reception and the DMRS CE.

9. The method of Claim 8, further comprising:

identifying, based on scheduling information, at least one compression weight for the joint operation,

wherein the scheduling information is associated with a reception of a signal-to-noise and interference ratio (SINR) to reduce interference; and

wherein the at least one compression weight is identified to increase the SINR for the data reception.

10. The method of Claim 9, wherein:

the SINR is identified for a single-UE (SU) operation and the interference is identified for a multi-UEs (MU) operation; and
the SU operation and the MU operation are identified based on the scheduling information.

11. The method of Claim 8, further comprising:

identifying at least one channel component for a data equalization operation; and
maintaining the at least one channel component for the DMRS CE.

12. The method of Claim 8, further comprising performing, based on scheduling information, the joint operation for preserving dominant components in a transformed domain including spatial resources in a spatial domain and an angle domain.

13. The method of Claim 8, further comprising:

transforming a signal or project the signal into a transformed domain including a spatial domain and an angle domain;
denoising at least one coefficient of kernel based on a signal-to-noise ratio (SNR) of the kernel included in a set of kernels;
constructing a channel based on the kernel including the denoised at least one coefficient and a projected basis; and
selecting spatial kernels including a higher SNR than other kernels included in the set of kernels for performing an equalization operation.

14. The method of Claim 8, further comprising identifying a compression matrix including a UE-specific matrix and a cell-specific matrix based on (i) artificial intelligence (AI)-based estimation, Canonical model (CM)-based estimation, or a UE-specific signal-to-leakage and noise ratio (SLNR) maximization operation,
wherein:

the compression matrix is obtained before performing a frequency domain CE; and
coarse channel information is obtained from a delay domain separated DMRS.

15. A non-transitory computer-readable medium comprising program code, that when executed by at least one processor, causes an electronic device to:

receive, from a user equipment (UE) via a multi-input multi-output unit (MMU), a demodulation reference signal (DMRS);
identify a combining weight based on the DMRS;
perform, based on the combining weight, a joint operation that performs a port reduction operation and a DMRS channel estimation (CE); and
perform, based on the joint operation, a minimum mean-square error interference rejection combining (MMSE-IRC) operation, in a reduce antenna dimension, for a data reception and the DMRS CE.

【FIGURE 1】

【FIGURE 2】

【FIGURE 3】

【FIGURE 4】

【FIGURE 5】

From Channel → DC (555) → Remove Cyclic Prefix (560) → S-to-P (565) → Size N FFT (570) → P-to-S (575) → Channel Decod. & Demod. (580) → Data Out

500

【FIGURE 6】

【FIGURE 7】

【FIGURE 8】

[FIGURE 9]

EP 4 645 769 A1

Original: no port reduction, frequency domain estimation only

900

```
64 antennas ──▶  ┌──────────────┐                              ┌──────────┐   ┌──────┐
                 │ Frequency    │ ╭─902                    ╭─904│ Interp.  │╭─906│      │
                 │ domain CE    │                              │ (per     │   │  EQ  │──▶
                 │ (per antenna)│──────────────────────────▶   │ antenna) │──▶│      │
                 └──────────────┘ 64                           └──────────┘   └──────┘
                                  antennas
```

Original 1: non-joint (spatial CE followed by port reduction)

```
64 antennas ──▶  ┌──────────────┐      ┌──────────────┐      ┌──────────┐      ┌──────────┐   ┌──────┐
                 │ Frequency    │╭─908 │ Spatial      │╭─910 │          │╭─912 │ Interp.  │╭─914│      │╭─916
                 │ domain CE    │      │ domain CE    │      │ Port     │      │ (per     │   │  EQ  │──▶
                 │ (per antenna)│────▶ │ (joint       │────▶ │ reduction│────▶ │ antenna) │──▶│      │
                 └──────────────┘      │ antenna)     │ 64   └──────────┘ P port└─────────┘   └──────┘
                                       └──────────────┘ antennas
```

Original 2: spatial compression after frequency domain estimation

```
                 ┌ ─ ─ ─ ─ ─ ─ ─ ─ ─ ─ ─ ─ ─ ─ ─ ─ ─ ─ ─ ─ ┐
64 antennas ──▶  │ ┌──────────────┐      ┌──────────────┐    │    ┌──────────┐   ┌──────┐
                 │ │ Frequency    │╭─918 │ Spatial      │╭─920│    │ Interp.  │╭─922│      │╭─924
                 │ │ domain CE    │      │ compression/ │    │    │ (per     │   │  EQ  │──▶
                 │ │ (per antenna)│────▶ │ denoising    │─── │──▶ │ antenna) │──▶│      │
                 │ └──────────────┘ 64   └──────────────┘    │ P  └──────────┘   └──────┘
                 └ ─ ─ ─ ─ ─ ─ ─ ─ antennas ─ ─ ─ ─ ─ ─ ─ ─ ┘ ports/kernels
```

Original 3: spatial compression before frequency domain estimation

```
                 ┌ ─ ─ ─ ─ ─ ─ ─ ─ ─ ─ ─ ─ ─ ─ ─ ─ ─ ─ ─ ─ ┐
64 antennas ──▶  │ ┌──────────────┐      ┌──────────────┐    │    ┌──────────┐   ┌──────┐
                 │ │ Spatial      │╭─926 │ Frequency    │╭─928│    │ Interp.  │╭─930│      │╭─932
                 │ │ compression/ │      │ domain CE    │    │    │ (per     │   │  EQ  │──▶
                 │ │ denoising    │────▶ │ (per         │─── │──▶ │ antenna) │──▶│      │
                 │ └──────────────┘ P    │ kernel/port) │    │ P  └──────────┘   └──────┘
                 └ ─ ─ ─ ─ ─ ─ kernels ─ └──────────────┘ ─ ┘ ports/kernels
```

26

【FIGURE 10】

【FIGURE 11】

【FIGURE 12】

1200

1202 DMRS → 1204 delay separation → Delay/OCC separated channel $\tilde{H}_0$, $\tilde{H}_1$ → 1206 Joint CE and port reduction

【FIGURE 13】

【FIGURE 14】

**【FIGURE 15】**

MMU

DMRS,
$\hat{H}_{N_r \times N_f}$

1 | Combining weight
dexision $B_{P \times N_r}$

Rx data
$y_{N_r \times N_f}$

Port reduction for data
$\hat{y}_{eff\square} = B \times y$

Rx data,
dimension reduced
$y_{eff_{P \times N_f}}$

2 | DMRS CE,
dimension reduced
$\hat{H}_{eff_{P \times N_f}}$

3 | MMSE-IRC (detector)
Operates on dimension-
reduced data and channel

1500

【FIGURE 16】

【FIGURE 17】

Europäisches
Patentamt

European
Patent Office

Office européen
des brevets

# EUROPEAN SEARCH REPORT

**Application Number**

EP 25 17 4032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/146449 A1 (ERICSSON TELEFON AB L M [SE]) 3 August 2023 (2023-08-03) * paragraphs [0058], [0055], [0059], [0060] * ----- | 1-15 | INV. H04L25/03 H04B7/0456 H04B7/08 H04L25/02 |
| A | US 2024/073063 A1 (HU YEQING [US] ET AL) 29 February 2024 (2024-02-29) * paragraphs [0119], [0120] * ----- | 6,13 | |

**TECHNICAL FIELDS SEARCHED (IPC)**

H04L
H04B

The present search report has been drawn up for all claims

| Place of search | Date of completion of the search | Examiner |
|---|---|---|
| Munich | 31 July 2025 | Belloni, Paolo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 17 4032

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2025

| Patent document cited in search report | Publication date | Patent family member(s) | | Publication date |
|---|---|---|---|---|
| WO 2023146449 A1 | 03-08-2023 | EP | 4473796 A1 | 11-12-2024 |
| | | JP | 2025505978 A | 05-03-2025 |
| | | US | 2025119190 A1 | 10-04-2025 |
| | | WO | 2023146449 A1 | 03-08-2023 |
| US 2024073063 A1 | 29-02-2024 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 63642458